# EUROPEAN PATENT APPLICATION

(11) **EP 0 672 797 A1**
(43) Date of publication of application: **20.09.1995**
(21) Application number: 94901029.2
(22) Date of filing: 02.12.1993
(51) Int. Cl.: E02F 9/22

(54) **SWING HYDRAULIC CIRCUIT IN CONSTRUCTION MACHINE**

(30) Priority: 02.12.1992 JP 345111/92
(71) Applicant: KABUSHIKI KAISHA KOMATSU SEISAKUSHO, Minato-ku Tokyo 107 (JP)
(72) Inventor: KON, Masaharu, Komatsu-shi Ishikawa 923-03 (JP)
(74) Representative: Meissner, Peter E., Dipl.-Ing.
(86) International application number: PCT/JP93/01758
(87) International publication number: WO 94/12737

(57) **Abstract**

A swing hydraulic circuit in a construction machine, wherein no shock occurs when a swing member is started or stopped even if the reach of the working machine is small and no delay occurs when the swing member is started or stopped even if the reach of the working machine is large. For this purpose, the swinging hydraulic circuit is provided with a remote control valve (30) for swinging, which has its pilot pressure to the secondary side controlled by the operation of a lever; a directional control valve (4) changed over by the pilot pressure from the remote control valve (30) for swinging; a hydraulic motor (5) for swinging, which has its supply flow rate from a hydraulic pump (1) controlled by the directional control valve (4); and two relief valves (11a, 11b) provided in paths (6a, 6b) on both sides of a hydraulic motor (5) for swinging. The circuit is further provided with a set pressure control means capable of changing set pressures of the both relief valves (11a, 11b) in accordance with the attitude of the working machine.

## Description

### FIELD OF THE INVENTION

The present invention relates to improvement of a swing hydraulic circuit for use in construction machines such as hydraulic shovels and hydraulic cranes.

### RELATED BACKGROUND ART

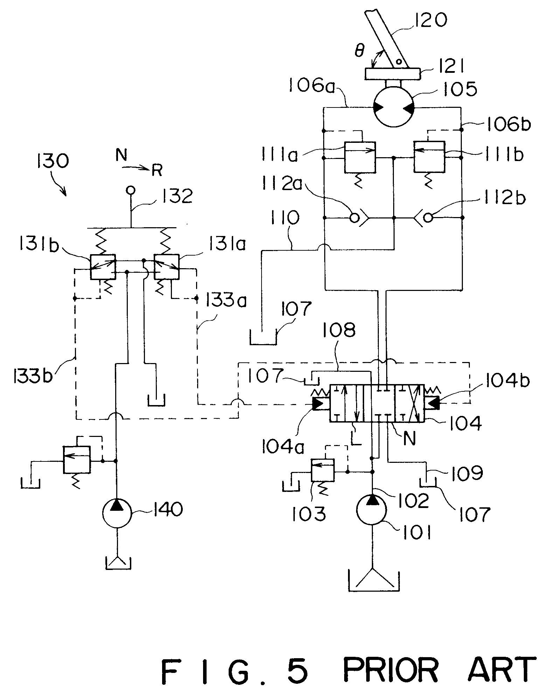

A swing hydraulic circuit for use in a hydraulic power shovel which has generally been used is shown in Fig. 5. A discharging flow passage 102 of a main hydraulic pump 101 is connected to both side flow passages 106a and 106b of a hydraulic motor 105 for turning a turning frame 121 which mounts a working machine boom 120 with a main relief valve 103 and a pilot directional control valve (hereafter referred to as "directional control valve") 104 and to a return oil passage 108 to a tank 107 to be switchable as required. Both side flow passages 106a and 106b are connected to a return oil passage 109 to the tank 107 through the directional control valve 104 to be switchable as required.

A turning remote control valve 130 is provided with a pair of variable reducing valves 131a and 131b and an operation lever 132. A pilot hydraulic pump 140 is connected to the primary sides of both variable reducing valves 131a and 131b and both flow passages 133a and 133b are connected to the secondary sides thereof. Both pilot flow passages 133a and 133b are pilot parts 104a and 104b at both ends of the directional control valve 104.

A relief valve 111a is provided between a return oil passage 110 to the oil reservoir 107 and a flow passage 106a and a relief valve 111b is provided between a return oil passage 110 to the oil reservoir 107 and a flow passage 106b.

Check valves 112a and 112b for preventing cavitation are provided in parallel with these relief valves 111a and 111b.

In a construction as described above, when, for example, the operation lever 132 is operated from a neutral position N to R direction, a pilot pressure is guided from the variable reducing valve 131a to the pilot flow passage 133a and further guided to the pilot part 104a of the directional control valve 104, and the directional control valve 104 is changed over from the neutral position N to a position L. A discharging oil of the hydraulic pump 101 flows into the oil passage 106a through the directional control valve 104 and further into the hydraulic motor 105 at the same time the hydraulic pressure rises up to the set pressure of the relief valve 111a. The discharging oil from the hydraulic motor 105 is returned to the oil reservoir 107 through the flow passage 106b and the directional control valve 14 to the return oil passage 109. Thus, the hydraulic 105 is driven and accelerated and the turning frame 121 is turned and accelerated.

When the operation lever 132 is reset to the neutral position N, the pilot pressure which has been guided to the pilot part of the directional control valve 104 is shut off and the directional control valve 104 is reset to the neutral position N. Then, the discharging oil from the hydraulic pump 101 is returned to the oil reservoir 107 through the return oil passage 108 and does not flow into the hydraulic motor 105. However, due to an inertial force of the turning frame, the hydraulic motor 105 sucks hydraulic oil from the oil reservoir 107 through the flow passage 106a, check valve 112a and return oil passage 110. When the pressure of this hydraulic oil is boosted to a set pressure of a relief valve 111b, the hydraulic oil is returned to the oil reservoir 107 through the flow passage 106b, relief valve 111b and return oil passage 110. In this case, the hydraulic oil is returned to the oil reservoir 107 against the present pressure of the relief valve 111b to act as a resistance to rotation of the hydraulic motor 105. Therefore, the inertial force of the turning frame 121 is absorbed and rotation of the hydraulic motor is stopped.

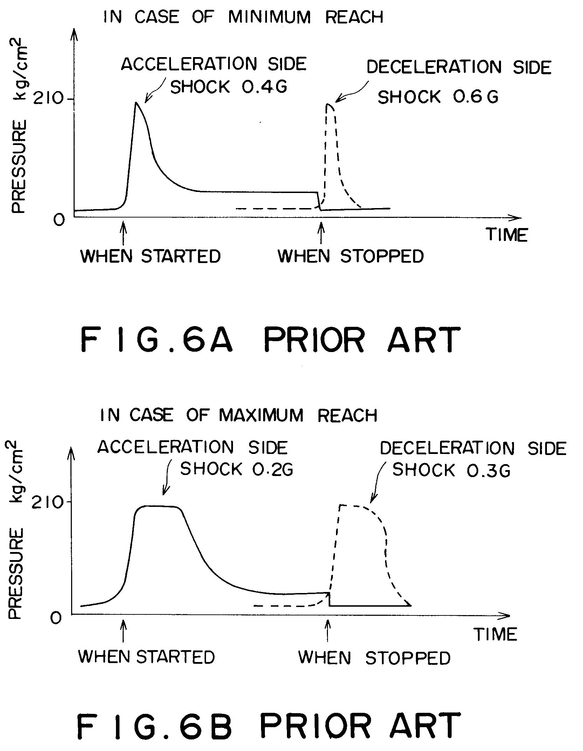

However, the inertial force of the turning frame 121 when the tilting angle ϑ of the boom 120 of the working machine installed on the turning frame 121 is small and the reach of the working machine is set at the longest greatly differs from that when the tilting angle ϑ is large and the reach of the working machine is set at the shortest. If the set pressure of the relief valve 111b is fixed, the starting torque and stopping torque (a torque to stop rotation of the hydraulic motor 105 according to the set pressure of the relief valve 111b) of the hydraulic motor 105 are excessively large as compared with the inertial force of the turning frame 121 when the reach of the working machine is smallest and therefore a shock at the time of starting and stopping is large as shown in Fig. 6A. On the other hand, there is a problem that, if the set pressure of the relief valve 111b is decreased in accordance with the shorter reach of the working machine 120 to reduce the shock, the inertial force of the turning frame 121 is excessively large wen the reach of the working machine 120 starting and stopping will be delayed as shown in Fig. 6B.

### DISCLOSURE OF THE INVENTION

An object of the present invention made to solve the above-described problem is to provide a swing hydraulic circuit for use in construction machines capable of preventing a shock upon starting and stopping of a turning frame when a reach of a working machine is short, and a delay of operation upon starting and stopping of the turning frame when the reach of the working machine is long.

According to the present invention, a swing hydraulic circuit for use in construction machines comprising a turning remote control valve for controlling a pilot pressure to a secondary side by operation of a lever, a directional control valve connected from the turning remote control valve to both pilot flow passages, a hydraulic motor for turning to which a flow rate of hydraulic oil from a hydraulic pump is controlled by the directional control valve, and relief valves provided on both side flow passages of the hydraulic motor for turning, further comprises a set pressure control means for varying the set pressures of both relief valves in accordance with an attitude of a working machine of a construction machine.

This set pressure control means comprises pressure switches provided at extreme ends of branched flow passages of both pilot flow passages from the turning remote control valve, a controller for receiving signals of respective pressure switches and a signal in accordance with the attitude of the working machine, and solenoid proportional valves for controlling the set pressures of both relief valves according to a command from the controller.

One-side ends of these solenoid proportional valves are connected to both relief valves through the pilot flow passages and the other ends are connected to the oil reservoir. The other ends of the solenoid proportional valves can be connected to the hydraulic pump.

A construction as described above enables to set a low set pressure of the relief valves when the tilting angle of the boom of the working machine is large and the reach of the working machine is small and therefore no shock will be caused when starting and stopping the turning frame. When the tilting angle of the boom of the working machine is small and the reach of the working machine is large, the set pressure of the relief valves can be high and therefore no delay of operation will be caused when starting and stopping the turning frame.

### BRIEF DESCRIPTION OF THE DRAWINGS

Fig. 1 is a swing hydraulic circuit diagram of a hydraulic shovel according to a first embodiment of the present invention;
Fig. 2 is a diagram showing a relationship between the current value and the set pressure;
Fig. 3 is a diagram showing a relationship between the reach of the working machine in clockwise rotation and the set pressure of the relief valves;
Fig. 4 is a swing hydraulic circuit diagram of a hydraulic shovel according to a second embodiment;
Fig. 5 is a swing hydraulic circuit diagram of a conventional hydraulic shovel;
Fig. 6A is a diagram showing a shock caused at the time of starting and stopping the turning frame when the reach of the working machine is smallest; and
Fig. 6B is a diagram showing a shock caused at the time of starting and stopping the turning frame when the reach of the working machine is largest.

### BEST MODE FOR CARRYING OUT THE INVENTION

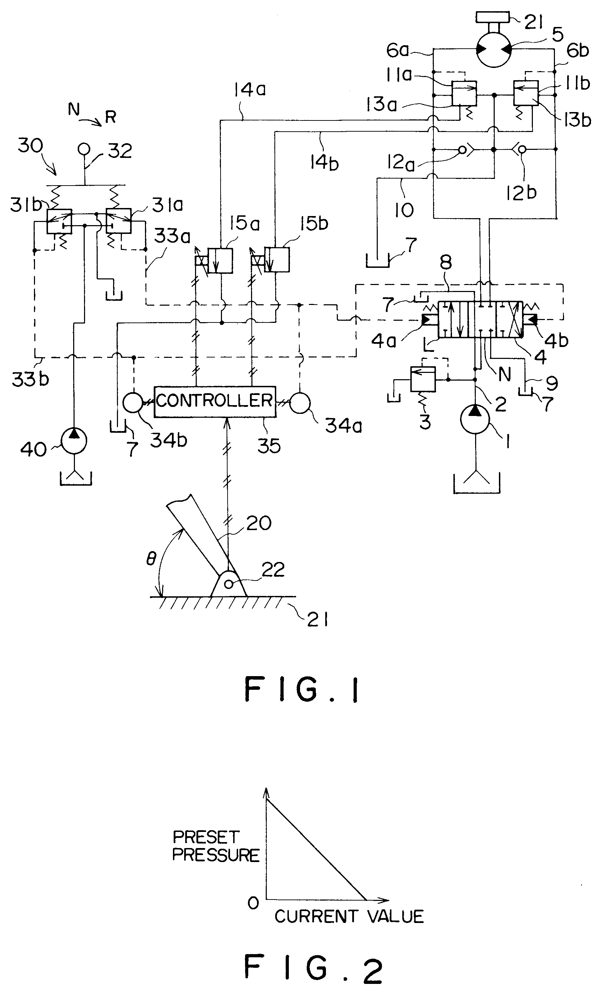

A first embodiment of a swing hydraulic circuit for use in construction machine according to the present invention is described in detail below, referring to Figs. 1 to 3.

A discharging flow passage 2 of a main hydraulic pump 1 is connected to be switchable as required to both side flow passages 6a and 6b of a turning hydraulic motor 5 of a turning frame 21 which mounts a boom 20 of a working machine and a return oil passage 8 to an oil reservoir 7 through a main relief valve 3 and a directional control valve 4 as shown in Fig. 1. The both side flow passages 6a and 6b are connected to be switchable as required to the return oil passage 8 to the oil reservoir 7.

A turning remote control valve 30 has a pair of variable reducing valves 31a and 31b and an operation lever 32 for these valves. A pilot hydraulic pump 40 is connected to the primary side of both variable reducing valves 31a and 31b while both pilot flow passages 33a and 33b are connected to the secondary side thereof. Both pilot flow passages 33a and 33b are connected to pilot parts 4a and 4b provided at both ends of the directional control valve 4, pressure switches 34a and 34b are provided at extreme ends of respective branch circuits, and the signals of the pressure switches 34a and 34b are transmitted to a controller 35.

A potentiometer 22 is attached to the rotation pivot of the boom 20. Accordingly, a tilting angle ϑ of the boom 20 is measured and a measured value of the angle is transmitted as an electric signal to the controller 35.

A relief valve 11a is provided between the return oil passage 10 to the oil reservoir 7 and the flow passage 6a and a relief valve 11b is provided between the return oil passage 10 to the oil reservoir 7 and the flow passage 6b. Check valves 12a and 12b for preventing cavitation are provided in parallel to both relief valves 11a and 11b.

In addition, both pilot flow passages 14a and 14b are connected to both pilot parts 13a and 13b of the both relief valves 11a and 11b and further to the oil reservoir 7 through solenoid proportional valves 15a and 15b. A set pressure of the solenoid proportional valves 15a and 15b is controlled according to a current value of the controller 35, and the characteristics of the current value and the set pressure are presented in an inverse proportion as shown in Fig. 2. Owing to these characteristics, the set pressure can be maintained at a high level even upon electrical failure to ensure safety of operation.

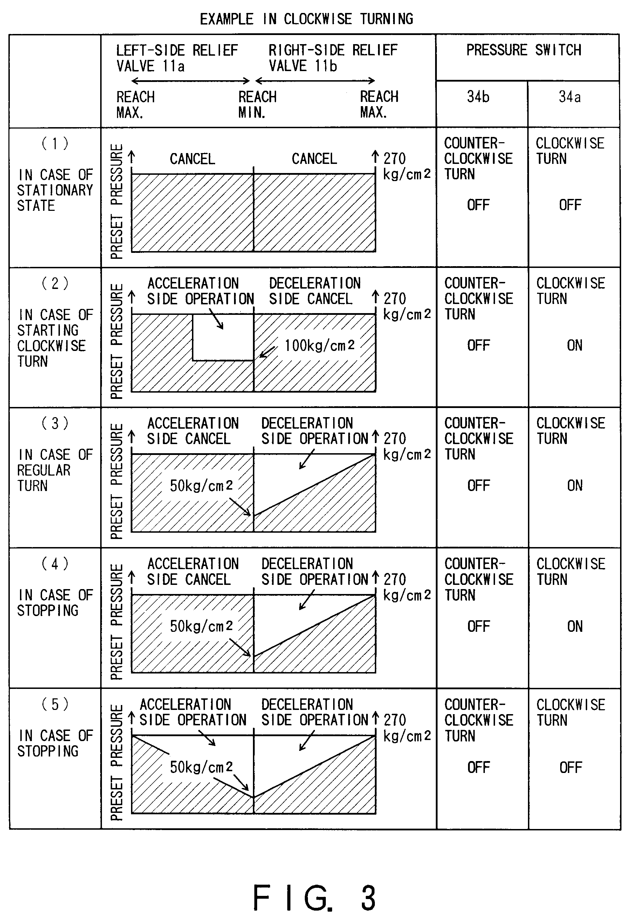

Those functions of the circuit in clockwise turning with the construction as described above are described referring to Fig. 3.
(1) In a stationary condition, is a canceled condition where the operation lever 32 is set at the neutral position N, a pilot pressure is introduced into neither the pilot flow passage 33a nor 33b, pressure switches 34a and 34b are set at OFF, and the left-side relief valve 11a and the right-side relief valve 11b of the controller 35 are not controlled.
(2) In starting of clockwise turning operation, the operation lever 32 is operated in the R direction, both pilot pressures are guided into the pilot oil passage 33a and further into the pilot part 4a o the directional control valve 4 and the directional control valve 4 is changed over to the position L. In this case, the pressure switches 34a provided at the extreme end of the branch circuit of the pilot oil passage 33a is turned to ON and generates an electric signal to the controller 35. The controller 35 operates to the left relief valve 11a according to the electric signal. The controller 35 receives an electric signal of the tilting angle ϑ of the boom 20 according to the potentiometer 22 and, if the value of the electric signal is smaller than the specified value (hereafter referred to as "the reach is large"), the electric signal is generated to the solenoid proportional valve 15a to control the pilot pressure of the pilot part 13a of the left-side relief valve 11a so that the set pressure of the left-side relief valve 11a is set to 270kg/cm². Even though the set pressure of the left-side relief valve 11a is 270kg/cm², the reach is large and therefore the shock is small. Since the set pressure is high as 270kg/cm^{2,} the starting will not be delayed even though the reach is large.
   If the value of the electric signal of the tilting angle ϑ is larger than the specified value (hereafter referred to as "the reach is small"), the controller generates this electric signal to the solenoid proportional valve 15a to control the pilot pressure of the pilot part 13a of the left-side relief valve 11a so that the set pressure is initially 100kg/cm2 and gradually reaches 270kg/cm². When the directional control valve 4 is changed over to the position L, the discharging oil of the hydraulic pump 1 flows into the oil flow passage 6a through the directional control valve 4 and, if the reach is small, the set pressure of the left-side relief valve 11a rises to 100kg/cm² and the oil enters into the hydraulic motor 5. The set pressure of the left-side relief valve is low as 100kg/cm2 even though the reach is small and therefore the shock upon starting is small. After starting, the set pressure of the left-side relief valve gradually rises to reach 100kg/cm² after starting and the hydraulic motor 5 is driven accelerated.
(3) In regular turning operation, though the pressure switch is set to ON, a specified time has passed. In this case, the controller 35 cancels the control of the left-side relief valve 11a (acceleration side) and sets the set pressure at 270kg/cm² to control the right-side relief valve 11b (deceleration side). In other words, when the reach is minimum, the controller 35 generates an electric signal to the solenoid proportional valve 15b, controls the pilot pressure of the pilot part of the right-side relief valve 11b to set the set pressure of the right-side relief valve 11b to 50kg/cm² so that the set pressure becomes higher in proportion to the value of the reach and reaches 270kg/cm² when the reach is maximum. Since the set pressure of the left-side relief valve 11a is 270kg/cm², mud can be removed from the sides of the bucket by utilizing the turning force.
(4) For stopping the working machine, the operation lever 32 is operated in a direction opposite to the R direction. The pilot pressure is not guided to the pilot flow passage 33a and the pressure switch is turned to OFF. However, the controller 35 maintains the operation for two seconds and therefore the working machine is returned to the stationary condition described in (1) by the same control as in regular operation described in (3). The pilot pressure is not guided into the pilot part 4a of the directional control valve 4, the directional control valve 4 is reset to the neutral position N, the discharging oil of the hydraulic pump 1 is returned to the oil reservoir 7 through the return oil passage 8, and the hydraulic oil flowing into the hydraulic motor 5 is stopped. However, the hydraulic motor 5 rotates for an extremely short period of time to suck the oil from the oil reservoir 7 through the flow passage 6a, the check valve 12a and the return oil passage 10 and the oil is returned to the oil reservoir 7 through the return oil passage 10 when the hydraulic pressure reaches the set pressure of the right-side relief valve. The set pressure of the right-side relief valve 11b is low when the reach is small and therefore the sock upon stopping is also small. Since the set pressure is high when the reach is large, stopping operation will not be delayed.
   In this example, when the controller 35 is able to control only one of both relief valves 11a and 11b, the set pressure of the right-side relief valve 11b is controlled to stop the working machine.
   An example of stopping operation when the set pressures of both relief valves 11a and 11b can be simultaneously controlled is described below.
(5) For stopping the working machine, the controller 5 controls both the left-side valve 11a (acceleration side) and the right-side relief valve (deceleration side). The set pressure for both relief valves 11a and 11b is set at 5kg/cm2 when the reach is minimum and at 270kg/cm2 when the reach is maximum. If the set pressure of the left-side relief valve 11a is changed in proportion to the value of reach, the so-called "swing back" that the working machine reacts to turn counterclockwise when its clockwise turning is suddenly stopped and reacts to turn clockwise when its counterclockwise turning is suddenly stopped, can be prevented.

The above description is made with an emphasis on clockwise turning. In case of counterclockwise turning, the operations are only reversed and therefore the description of counterclockwise is omitted.

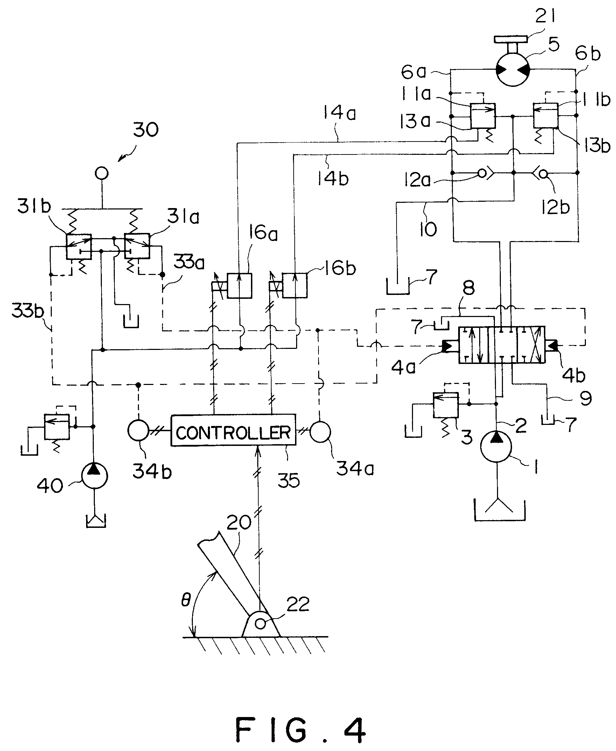

A second embodiment is described below referring to Fig. 4. In the second embodiment, all components are given the same reference numerals as in the first embodiment except that the setting means for the set pressure of both relief valves 11a and 11b differs from that in the first embodiment, and therefore the description thereof is omitted.

Both flow passages 14a and 14b are connected to both pilot parts 13a and 13b of the both relief valves 11a and 11b and further connected to a pilot hydraulic pump 40 through the solenoid proportional valves 16a and 16b. The pilot pressure of the solenoid proportional valves 16a and 16b varies with the current value of the controller and is maximum when this current value is zero. The pilot pressure becomes smaller as the current value increases. Accordingly, The current value of the controller and the set pressure of both relief valves 11a and 11b are in an inverse proportional relationship as shown in Fig. 2. Even when the controller 35 fails and cannot generate electric signals, the set pressure of both relief valves 11a and 11b is the maximum. Though a shock is caused upon starting and stopping of turning when the reach is small, stopping operation will not be delayed when the reach is large. In addition, when the construction machine is parked on a slope, the set pressure remains maximum and the working machine falls down, thus ensuring the safety.

### INDUSTRIAL APPLICABILITY

The present invention is useful as the swing hydraulic circuit for use in construction machines which are free from a shock upon starting and stopping of the turning frame even though the reach of the working machine is small and a delay upon starting and stopping of the turning frame even though the reach of the working machine is large.

## Claims

1. A swing hydraulic circuit for use in construction machines, comprising a turning remote control valve for controlling a pilot pressure to a secondary side with operation of a lever, a directional control valve connected from said turning remote control valve to both pilot flow passages, a hydraulic motor for turning to which a flow rate of oil from an oil reservoir is controlled by said directional control valve, and relief valves which are provided at both flow passages of said hydraulic motor for turning, wherein a set pressure control means capable of varying the set pressure of both relief valves in accordance with an attitude of the working machine of said construction machine is provided.

2. A swing hydraulic circuit for use in construction machines according to Claim 1, wherein said set pressure control means comprises pressure switches respectively provided at extreme ends of branched flow passages of both pilot flow passages from said turning remote control valve, a controller which receives signals from respective pressure switches and signals in response to the attitude of the working machine of said construction machine, and solenoid proportional valves for controlling the set pressures of said both relief valves according to a command from said controller.

3. A swing hydraulic circuit for use in construction machines according to Claim 2, wherein one-side ends of said solenoid proportional valves are connected to said both relief valves through the pilot flow passages and the other ends thereof are connected to the oil reservoir.

4. A swing hydraulic circuit for use in construction machines according to Claim 2, wherein one-side ends of said solenoid proportional valves are connected to said both relief valves through the pilot flow passages and the other ends thereof are connected to the pilot hydraulic pump.
